Europäisches Patentamt

European Patent Office

Office européen des brevets

(11) Veröffentlichungsnummer: **0 375 899**
**A2**

## (12) EUROPÄISCHE PATENTANMELDUNG

(21) Anmeldenummer: **89120830.8**

(51) Int. Cl.5: **B23B 3/06**

(22) Anmeldetag: **10.11.89**

(30) Priorität: **24.12.88 DE 3843795**

(43) Veröffentlichungstag der Anmeldung:
**04.07.90 Patentblatt 90/27**

(84) Benannte Vertragsstaaten:
**AT CH FR GB IT LI**

(71) Anmelder: **Gildemeister AG**
**Morsestrasse 1**
**D-4800 Bielefeld 11(DE)**

(72) Erfinder: **Schlie, Frithjof**
**Böckerstrasse 8**
**D-3000 Hannover 51(DE)**

(54) **Numerisch gesteuerte Drehmaschine mit verschieblichem Spindelkasten.**

(57) Bei einer numerisch gesteuerten Schrägbett-drehmaschine wird der Spindelkasten (5) auf quer zu den Längsführungen (2) des Werkzeugträgers (11) und horizontal liegenden Führungen (15) verschieb-bar gelagert. Dadurch können auch außermittige Bohr- und Fräsbearbeitungen an im Spannfutter der Drehmaschine gehaltenen Werkstücken durchgeführt werden. Bei einer bevorzugten Ausführungsform sind die Führungen (15) für den Spindelkasten (5) auf einem Konsol (14) angeordnet, so daß bei unverän-dertem Maschinenaufbau wahlweise ein stationärer oder ein verschieblicher Spindelkasten eingesetzt werden kann.

Fig. 1

EP 0 375 899 A2

# Numerisch gesteuerte Drehmaschine mit verschieblichem Spindelkasten

Die Erfindung betrifft eine numerisch gesteuerte Drehmaschine mit einer in einem Spindelkasten gelagerten Werkstückspindel, mit einem Bettschlitten, der in Spindelachsrichtung verfahrbar ist und Führungsbahnen für einen Planschlitten trägt, die quer zur Spindelachrichtung verlaufen und gegenüber der Horizontalen geneigt sind und mit einem auf dem Planschlitten befestigten Werkzeugträger, der zumindest ein rotierend angetriebenes Werkzeug trägt.

Ein derartige Maschine ist beispielsweise aus EP-A 0 144 306 bekannt. Auf dem Bettschlitten sind zwei Planschlitten gelagert, von denen der eine einen Werkzeugkopf mit einem rotierend angetriebenen Werkzeug trägt. Um auch Bohrungen oder Fräsungen außerhalb der Mitte ausführen zu können, ist der Werkzeugkopf senkrecht zur Führungsebene des Bett- und Planschlittens verschiebbar. Dazu muß auf dem Planschlitten ein Führungsturm angeordnet sein, der viel Platz beansprucht und die darunterliegenden Führungsbahnen stark belastet. Die Anhäufung von drei Führungsbahnenpaaren auf engstem Raum bedeutet auch eine Stabilitätseinbuße. Es müssen immerhin drei getrennte Vorschubantriebe vorgesehen werden, von denen mindestens zwei vollständig der Bettschlitten tragen muß.

Es sind auch schon Drehmaschinen vorgeschlagen worden, die eine derartige Anhäufung von Führungsbahnen dadurch vermeiden, daß eine Vorschubbewegung von der Werkstückspindel ausgeführt wird. Die Drehmaschine gemäß DE-OS 27 06 178 besitzt einen in einer horizontalen Ebene verfahrbaren Kreuzschlitten, auf dem ein Werkzeugträger gelagert ist, der sowohl feststehende Drehmeißel als auch rotierend angetriebene Bohr- und Fräswerkzeuge in Bearbeitungsstellung bringen kann. Zum Fräsen von Flächen oder Paßfedernuten, die größer als das eingesetzte Werkzeug sind, kann die Werkstückspindel mit ihrem Spindelkasten senkrecht zu den Verfahrrichtungen des Kreuzschlittens verschoben werden. Der Spindelkasten ist dabei an einer Säule seitlich geführt. Der Vorschub wird durch eine Gewindespindel und Vorschubmutter erzeugt. Der Spindelkasten kann in beliebiger Position an der Säule festgeklemmt werden. Der Werkstückspindelantrieb erfolgt von einem feststehenden Motor über zwei Riementriebe aus. Je eine Riemenscheibe der beiden Riementriebe ist auf einer Zwischenwelle gelagert, die von einem Schwenkarm gehalten wird. Die schwenkbare Zwischenwelle ist erforderlich, um die Abstandsänderung zwischen Motorausgangswelle und Werkstückspindel bei Verschiebung des Spindelkastens auszugleichen.

Die Schwerkraft von Werkstückspindel und Spindelkasten führt bei der gewählten Anordnung zu ungünstigen Belastungen der Spindelkastenführungen. Soll eine Verschiebung des Spindelkastens während der Zerspanung stattfinden, müssen alle Schwerkräfte von der Vorschubspindel ertragen werden. Unter diesen Bedingungen kann die Werkstückspindel nicht noch zusätzlich durch die Trumkräfte des Riemenantriebs belastet werden, insbesonder auch weil sie in einer für die Bearbeitungsgenauigkeit ungünstigen Richtung wirken. Sie werden daher in einer besonderen Lagerung der spindelseitigen Riemenscheibe aufgefangen.

Der Erfindung liegt die Aufgabe zugrunde, eine Schrägbettdrehmaschine mit einer Y-Vorschubachse auszustatten, wobei die Drehmaschine eine hohe Steifigkeit und damit hohe Genauigkeit aufweisen soll.

Die Aufgabe wird durch die kennzeichnenden Merkmale des Hauptanspruchs gelöst.

Es ist grundsätzlich wünschenswert, auch bei Drehmaschinen mit zusätzlicher Y-Vorschubachse, das bewährte Schrägbettkonzept beizubehalten, da es Vorteile für die Bedienung und den Spänefall aufweist.

Durch die Aufteilung der Vorschubbewegungen auf Werkzeugträger und Spindelkasten wird die steifigkeitsmindernde Anhäufung von Führungsbahnen vermieden. Die Vorschubbewegung des Spindelkastens in Y-Richtung erlaubt bei 4-achsigen Drehmaschinen mit zwei unabhängig gesteuerten Werkzeugträgern auf gegenüberliegenden Seiten der Werkstückachse, daß diese für beide Werkzeugträger wirksam wird. Die horizontal Führung des Spindelkastens gewährleistet eine sichere Aufnahme der Gewichtskräfte von Werkstück, Spindel und Spindelkasten. Der Vorschubantrieb für den Spindelkasten braucht die Gewichtskräfte nicht aufzunehmen und kommt daher mit kleinen Verstellkräften aus. Eine Klemmung des Spindelkastens auf den Führungen kann vollends entfallen. Das thermisch bedingte Wachsen des Spindelkastens geht nicht vollständig in die Fertigungsgenauigkeit bei Radialbearbeitung ein.

Der Spindelantrieb kann so angeordnet werden, daß die Trumkräfte des Riementriebes zwischen Motor und Werkstückspindel die Spindel in einer Richtung belasten, die geringe Genauigkeitseinbußen zur Folge haben. Der Antriebszug gestaltet sich sehr einfach, wenn der Antriebsmotor auf einer Wippe befestigt ist und mit dieser gemeinsam eine Schwenkbewegung ausführt, die von der Verschiebung des Spindelkastens abhängt.

Wenn die Führungen für den Spindelkasten auf einem Konsol vorgesehen werden, das mit dem Maschinenbett verschraubt werden kann, ergibt sich eine Montagegruppe, die an Stelle des feststehenden Spindelkastens wahlweise an einer normalen Schrägbettdrehmaschine verwendet werden kann. Es ergibt sich ein Baukasten aus einer Drehmaschine mit zwei oder mit drei Vorschubachsen, bei dem die meisten Bauteile unverändert bleiben können. Vorteilhafter Weise bildet der Vorschubantrieb für den Spindelkasten mit dem Konsol eine Einheit.

Numerische Steuerungen sind heute ohne weiteres in der Lage, die Korrektur des Werkzeugvorschubwertes in der X-Richtung bei vorgegebenem Y-Vorschubwert des Spindelkastens, die sich aus dem Winkel zwischen X- und Y-Achsrichtung ergibt, automatisch zu ermitteln.

Bei Verwendung eines Reitstocks muß die Reitstockspitze die gleiche Vorschubbewegung ausführen wie die Werkstückspindel. Dazu können gleiche oder ähnliche Baugruppen verwendet werden wie bei dieser, wobei die Bewegung durch die Vorschubsteuerung synchronisiert wird.

Die Erfindung wird an Hand der nachfolgenden Zeichnungen näher erläutert. Es zeigen:

     Fig. 1 eine Stirnansicht der erfindungsgemäßen Drehmaschine;

     Fig. 2 eine Seitenansicht des Spindelantriebs;

     Fig. 3 eine fünfachsige Drehmaschine.

Das Maschinenbett 1 besitzt eine Führungsbahn 2 für einen Bettschlitten 3 und eine Anschraubfläche 4 für einen Spindelkasten. Der Bettschlitten 3 trägt Führungen 6 für einen Planschlitten 7, der von einem Vorschubmotor 8 über eine Gewindespindel 9 und einen Riementrieb 10 verschoben wird. Auf dem Planschlitten 7 ist ein Werkzeugträger 11 befestigt, in dem eine Werkzeugspindel 30 gelagert ist, die von einem Antriebsmotor 12 rotierend angetrieben wird und ein Werkzeug 13, z. B. einen Fräser, aufnimmt.

An der Anschraubfläche 4 für den Spindelkasten ist ein Konsol 14 befestigt, das horizontale Führungen 15 für den Spindelkasten 5 besitzt. Im Spindelkasten 5 ist die Werkstückspindel 16 gelagert. An der freien Stirnseite des Konsols 14 ist ein Gehäuse 17 für einen Riementrieb 18 angeschraubt, an dem der Vorschubantriebsmotor 19 so angeordnet ist, daß er unter das Konsol ragt. Der Spindelkasten wird durch die Gewindespindel 20 und die Spindelmutter 21 verschoben. Mit der Werkstückspindel 16 ist eine Riemenscheibe 22 verbunden, die über einen Antriebsriemen 23 von dem Hauptantriebsmotor 24 in Drehung versetzt wird. Der Hauptantriebsmotor 24 ist auf einer Motorwippe 25 befestigt, die um eine mit dem Maschinenbett 1 verbundene Achse 26 schwenkbar ist. Motorwippe 25 und Spindelkasten 5 werden von einem Abstandshalter 27 auf konstanten Abstand gehalten. Der Abstandshalter 27 ist geteilt ausgeführt, wobei die Teile über ein Langloch 28 so miteinander verbunden werdne können, daß der Antriebsriemen 23 die erforderliche Vorspannung erhält. Eine Verschiebung des Spindelkastens 5 bewirkt somit eine Schwenkbewegung der Motorwippe 25, wobei der Abstand zwischen Werkstückspindel 16 und Ausgangswlle 29 des Hauptantriebsmotors 24 unverändert bleibt.

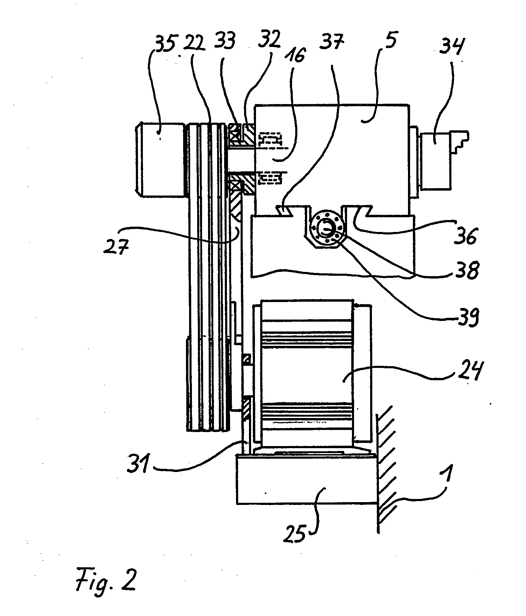

Fig. 2 zeigt den Werkstückspindelantrieb in Seitenansicht. Der Hauptantriebsmotor 24 ist auf der Motorwippe 25 befestigt, die an dem nur angedeuteten Maschinenbett 1 drehbar gelagert ist. Die Motorwippe 25 besitzt einen Bügel 31, der mit dem Abstandshalter 27 drehbar verbunden ist. An dem Spindelkasten 5 ist ein Flansch 32 befestigt, der die nur teilweise dargestellte Werkstückspindel 16 umgibt. Auf dem Flansch 32 ist ein Wälzlager 33 vorgesehen, das zur Lagerung des Abstandshalters 27 auf dem Flansch 33 dient. Die Werkstückspindel 16 trägt in üblicher Weise an ihrem vorderen Ende das Spannfutter 34 und an ihrem anderen Ende die Riemenscheibe 22 und den Spannzylinder 35. Der Spindelkasten 5 wird quer zur Zeichnungsebene in einer Schwalbenschwanzführung 36 geführt, die durch eine Druckleiste 37 spielfrei gehalten werden kann. Der Vorschub wird von einer Kugelgewindespindel 38 und einer Kugelumlaufmutter 39 bewirkt.

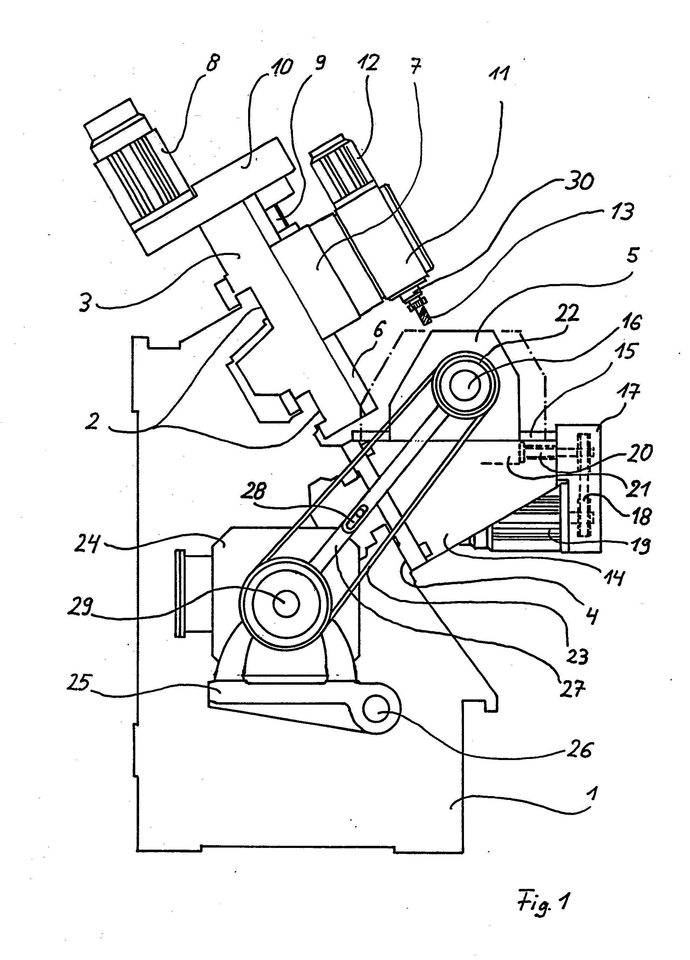

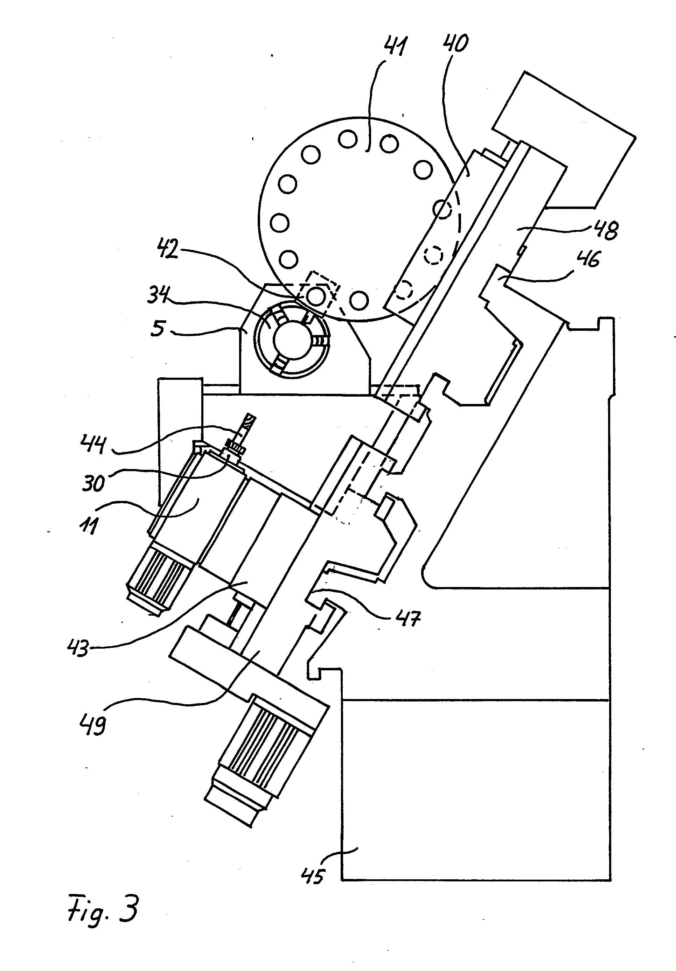

Fig. 3 zeigt die Einrichtung einer 5-Achsen Drehmaschine. Das Maschinenbett 45 hat zwei Führungsbahnen 46,47 und trägt zwei Bettschlitten 48,49. Auf dem oberen Bettschlitten 48 ist ein Planschlitten 40 mit einem Werkzeugrevolver 41 gelagert. Der Werkzeugrevolver 41 kann sowohl Drehwerkzeuge 42 als auch rotierend angetriebene Fräs- und Bohrwerkzeuge aufnehmen. Auf dem Planschlitten 43 des unteren Bettschlittens 49 ist der bereits in Fig. 1 dargestellte Werkzeugträger 11 mit angetriebener Werkzeugspindel 30 gelagert, die ein einziges Fräswerkzeug 44 trägt. Die Anordnung einer Vorschubachse im Spindelkasten 5 hat den Vorteil, daß an dem im Spannfutter 34 gehaltenen Werkstück gleichzeitig mit zwei Werkzeugen mittige Dreh-, Fräs- und Bohrbearbeitung aber auch außermittige Bohr- und Fräsbearbeitung sowohl von dem oberen als auch von dem unteren Werkzeugträger 11,41 ausgeführt werden kann.

## Ansprüche

1. Numerisch gesteuerte Drehmaschine mit einer in einem Spindelkasten (5) gelagerten Werkstückspindel (16), mit mindestens einem Bettschlitten (3,48,49), der in Spindelachsrichtung auf einem Maschinenbett (1,45) verfahrbar ist und Führungsbahnen (6) für einen Planschlitten (7,40,43) trägt, die quer zur Spindelachsrichtung verlaufen und gegenüber der Horizontalen geneigt sind und mit einem auf dem Planschlitten (7,40,43) befestigten Werkzeugträger (11,41), der zumindest ein rotierend angetriebenes Werkzeug (13,44) trägt, dadurch gekennzeichnet, daß der Spindelkasten (5) quer zur Führungsbahn des oder der Bettschlitten (2,46,47) und horizontal verschieblich ist.

2. Numerisch gesteuerte Drehmaschine nach Anspruch 1 dadurch gekennzeichnet, daß der Hauptantriebsmotor (24) der Werkstückspindel (16) auf einer Motorwippe (25) befestigt ist, und daß die Motorwippe (25) durch einen Abstandshalter (27) mit dem Spindelkasten (5) verbunden ist.

3. Numerisch gesteuerte Drehmaschine nach Anspruch 2 dadurch gekennzeichnet, daß der Abstandshalter (27) in der Länge verstellbar ist.

4. Numerisch gesteuerte Drehmaschine nach Anspruch 1 dadurch gekennzeichnet, daß der Spindelkasten (5) auf einem Konsol (14) verschieblich ist, welches auf dem Maschinenbett (1,45) an Stelle eines stationären Spindelkastens befestigt ist.

5. Numerisch gesteuerte Drehmaschine nach Anspruch 4 dadurch gekennzeichnet, daß der Vorschubantriebsmotor (19) des Spindelkastens (5) unterhalb des Konsols (14) und an diesem angeordnet ist.

6. Numerisch gesteurte Drehmaschine nach Anspruch 1 dadurch gekennzeichnet, daß die Komponente der Spindelkastenverschiebung in X-Richtung automatisch von der Maschinensteuerung mit dem Vorschubwert des Werkzeugträgers (11,41) in Planrichtung verrechnet wird.

7. Numerisch gesteuerte Drehmaschine nach Anspruch 3 mit einem Reitstock dadurch gekennzeichnet, daß auf dem Reitstockträger ein dem Konsol (14) des Spindelkastens (5) entsprechendes Reitstockkonsol angeordnet ist, das Führungsbahnen für die Verschiebung des Reitstocks horizontal und quer zur Führungsbahn des Bettschlittens trägt, daß an dem Konsol ein Vorschubantrieb zur Querverschiebung des Reitstocks vorgesehen ist, der mit den gleichen Vorschubwerten angesteuert wird wie der Vorschubantriebsmotor (19) des Spindelkastens(5).

Fig. 1

Fig. 2

Gildemeister AG

Fig. 3